# EUROPÄISCHE PATENTSCHRIFT

(11) **EP 1 400 547 B1**
(45) Veröffentlichungstag und Bekanntmachung des Hinweises auf die Patenterteilung: **14.03.2007**
(21) Anmeldenummer: 03103473.9
(22) Anmeldetag: 22.09.2003
(51) Int. Cl.: C08G 18/40, C08J 9/00, C08L 75/04

(54) **Zweikomponenten-Schaumsystem für die Herstellung von Bauschäumen und deren Verwendung**
Two-component foam system for the production of construction foams and use thereof
Système de mousse à deux composants pour la préparation de mousses de construction et leur utilisation

(30) Priorität: 23.09.2002 DE 10244171
(43) Veröffentlichungstag der Anmeldung: 24.03.2004
(73) Patentinhaber: HILTI Aktiengesellschaft, 9494 Schaan (LI)
(72) Erfinder: Jakobströer, Petra, 86899, Landsberg (DE); Schulz-Hanke, Wolfgang, 86836, Untermeitingen (DE); Förg, Christian, 86807, Buchloe (DE)
(74) Vertreter: Wildi, Roland

(56) Entgegenhaltungen:
- EP-A- 0 704 474
- US-A- 4 463 107

## Beschreibung

Gegenstand der vorliegenden Erfindung ist ein Zweikomponenten-Schaumsystem zur Herstellung von Schäumen für Bauzwecke mit einer (A), die mindestens ein Polyol, gegebenenfalls einen Katalysator für die Reaktion des Polyols mit dem Polyisocyanat und eine wässrige Polymerdispersion als Schaumbildner enthält, und einer (B),die mindestens ein Polyisocyanat enthält, wobei die Mengenverhältnisse von Polyolen) und Polyisocyanat(en) so abgestimmt sind, daß sich beim bestimmungsgemäßen Vermischen der Polyolkomponente (A) mit der Polyisocyanatkomponente (B) ein Molverhältnis von Isocyanatgruppen des Polyisocyanats zu OH-Gruppen der Polyole (NCO:OH-Verhältnis) von 1:5 bis 10:1, vorzugsweise von 1:1 bis 2:1 ergibt.

Es ist bereits bekannt, dass man zum Verfüllen von Öffnungen in Decken und Wänden von Gebäuden, namentlich zum Brandschutz Ortsschäume und Formteile auf der Basis von Polyurethanschäumen einsetzen kann. Da die herkömmlichen Polyurethanschäume, wie beispielsweise die normalerweise eingesetzten Bauschäume, keine ausreichenden Brandschutzeigenschaften für diese Anwendung besitzen, werden diese Schäume mit flüssigen und festen Brandschutzadditiven, sowie mit anorganischen Füllstoffen ausgerüstet, um die erforderliche Feuerwiderstandsdauer zu erreichen. Zusätzlich werden spezielle Polyurethan-Basismaterialien beziehungsweise phosphorhaltige Polyole eingesetzt.

Eine weitere Möglichkeit der Verbesserung der Brandschutzeigenschaften von Polyuretharischäumen besteht in dem Bestreichen des in die zu schützende Öffnung eingebrachten Schaums mit einer Brandschutzbeschichtung. Diese Brandschutzbeschichtung kann beispielsweise intumeszenzfähig sein, das heißt Bestandteile enthalten, die beim Erhitzen auf die Brandtemperatur aufschäumen und in dieser Weise eine Isolierschicht zwischen dem Feuer und dem Schaum ausbilden.

Weiterhin ist es aus den deutschen Offenlegungsschriften 37 32 203 und 39 42 851 bekannt, dass man Schaumstoffe auf Polyurethanbasis mit Feststoffe enthaltenden organischen Bindemitteln tränken oder imprägnieren kann, um in dieser Weise zu erreichen, dass der Polyurethanschaum im Brandfall nicht schmilzt und abtropft oder von selbst verlöscht.

Gegenstand der deutschen Patentschrift 199 55 839 ist die Verwendung von quellbare Füllstoffe enthaltenden Kunststoffschäumen zur Abdichtung von Mauerdurchführungen, was aber in diesem Fall darauf abzielt, das Eindringen von Wasser in den mit Hilfe dieser Kunststoffschäume abgedichteten Mauerspalt in das Innere des Gebäudes durch das Aufquellen des in Wasser quellbaren Polymers zu verhindern.

Schließlich sind zum Verfüllen von Fugen und kleineren Öffnungen in Bauten Dichtmassen auf der Basis von Acrylsäureestercopolymeren bekannt, die in Verbindung mit anorganischen Füllstoffen, wie Gips oder Kreide, ein sehr günstiges Brandverhalten zeigen und eine stabile Aschekruste bilden. Diese Dichtmassen schäumen jedoch nicht auf und sind daher ausschließlich für das Verfüllen von schmalen Fugen und kleinen Öffnungen einsetzbar.

Alle diese vorbekannten Materialien zum Ausfüllen von Öffnungen in Brandschutzdecken und -wänden vermögen aber nicht vollständig zu befriedigen, indem entweder flüssige oder feste Brandschutzadditive notwendig sind, welche die Material- und Herstellungskosten erheblich steigern, oder aber feste Additive und anorganische Füllstoffe, welche die Viskosität der reaktionsfähigen Ausgangssubstanz erhöhen, wodurch die Verarbeitung vor Ort stark erschwert wird. Beispielsweise steigt der Kraftaufwand zum Ausbringen eines Zweikomponenten-Schaumsystems aus einer Mehrkammer-Kartusche bei höherer Viskosität der Komponenten erheblich an. Weiterhin ist selbst durch den Zusatz von speziellen verstärkenden Additiven der Zusammenhalt der im Brandfall gebildeten Aschekruste verhältnismäßig gering, so dass Stücke der Aschekruste aus der abzudichtenden Öffnung herausfallen können, wodurch die Integrität der Abdichtung gefährdet wird.

Das zusätzliche Bestreichen eines in die Öffnung eingebrachten Schaums ist ein weiterer Arbeitsschritt, der zusätzlichen zeitlichen und finanziellen Aufwand erforderlich macht, ganz abgesehen von dem zusätzlichen Materialaufwand.

Dichtmassen auf der Basis von Acrylat-Dispersionen sind zwar kostengünstig und benötigen nur geringe Zusätze an Brandschutzmitteln, schäumen jedoch nicht auf und sind daher für die Abdichtung größerer Öffnungen beziehungsweise Fugen oder Kabel- und Rohrdurchführungen nicht geeignet.

Die EP-A-0 704 474 beschreibt ein Verfahren zur Herstellung eines harten Polyurethanschaums durch Umsetzen eines organischen Polyisocyanats mit einem Polyol in Gegenwart eines Treibmittels und gegebenenfalls eines oberflächenaktiven Mittels, wobei als Treibmittel eine wässrige Polymeremulsion enthalten ist, die ein Polymer von ethylenisch ungesättigten Monomeren umfaßt. Die Emulsion kann 20 bis 70 Gew.-% des Polymers enthalten und wird in einer Menge von 0,5 bis 20 Gewichtsteilen Polymer pro 100 Teile Polyol eingesetzt.

Die der vorliegenden Erfindung zugrundeliegende Aufgabe besteht darin, ein Zweikomponenten-Schaumsystem zur Herstellung von Schäumen für Bauzwecke der eingangs definierten Art anzugeben, welches in einfacher Weise in die Öffnungen beziehungsweise Fugen oder Kabel- oder Rohrdurchführungen von Wänden und Decken von Gebäuden eingebracht werden kann und bei hoher Feuerwiderstandsdauer verbesserte Wärmeisolations- und Brandschutzeigenschaften ermöglicht und dies bei Abwesenheit zusätzlicher Brandschutzadditive, und mit dem es möglich ist, auch vor Ort auf der Baustelle einen Schaumstoff herzustellen, der aufgrund einer faserartigen Struktur überraschend vorteilhafte mechanische Eigenschaften aufweist.

Diese Aufgabe wird nun gelöst durch das Zweikomponenten-Schaumsystem nach Anspruch 1. Die Unteransprüche betreffen bevorzugte Ausführungsformen dieses Erfindungsgegenstandes sowie die Verwendung dieses Zweikomponenten-Schaumsystems zum Ausschäumen von Öffnungen, Kabel- und Rohrdurchführungen in Wänden, Böden und/oder Decken, von Fugen zwischen Decken und Wandteilen, zwischen Maueröffnungen und einzubauenden Konstruktionsteilen, wie Fenster- und Türstöcken, zwischen Decken und Wänden, zwischen Außenwänden und vorgehängten Fassaden von Gebäuden zum Zwecke der Befestigung und/oder des Brandschutzes.

Gegenstand der Erfindung ist daher ein Zweikomponenten-Schaumsystem zur Herstellung von Schäumen für Bauzwecke, mit einer Polyolkomponente (A), die mindestens ein Polyol, gegebenenfalls einen Katalysator für die Reaktion des Polyols mit dem Polyisocyanat und eine wässrige Polymerdispersion als Schaumbildner enthält, und einer Polyisocyanatkomponente (B), die mindestens ein Polyisocyanat enthält, wobei die Mengenverhältnisse von Polyol(en) und Polyisocyanat(en) so abgestimmt sind, daß sich beim bestimmungsgemäßen Vermischen der Polyolkomponente (A) mit der Polyisocyanatkomponente (B) ein Molverhältnis von Isocyanatgruppen des Polyisocyanats zu OH-Gruppen der Polyole (NCO:OH-Verhältnis) von 1:5 bis 10:1, vorzugsweise von 1:1 bis 2:1 ergibt, und die dadurch gekennzeichnet ist, daß die wässrige Polymerdispersion in einer solchen Menge in der Polyolkomponente (A) enthalten ist, daß sich ein Wasseranteil in der Polyolkomponente (A) von 20 bis 60 Gewichtsteilen pro 100 Gewichtsteile des beziehungsweise der Polyole der Polyolkomponente (A) ergibt, die wässrige Polymerdispersion als Polymer mindestens einen Vertreter der Polyurethane, Polyvinylacetate, Polyvinylether, Polyvinylpropionate, Polystyrole, natürliche oder synthetische Kautschuke, Poly((meth)acrylate) und Homo- und Copolymere auf der Grundlage von (Meth)acrylaten, Acrylnitril, Vinylestern, Vinylethern, Vinylchlorid und/oder Styrol umfassenden Gruppe enthält und die Polyolkomponente (A) mindestens einen Zellstabilisator in einer Menge von 0,01 bis 5 Gew.-% ausgewählt aus der alkoxylierte Fettsäuren, ethoxylierte (C₁-C₁₈)-Alkylphenole und/oder ethoxyliertes Rizinusöl umfassenden Gruppe enthält.

Es hat sich überraschenderweise gezeigt, dass durch die Anwesenheit einer wässrigen Polymerdispersion in der Polyolkomponente eines solchen Zweikomponenten-Schaumsystems zur Herstellung von Polyurethanschäumen sich besonders vorteilhafte Ergebnisse sowohl im Hinblick auf die Handhabung dieses Zweikomponenten-Schaumsystems als auch im Hinblick auf die Eigenschaften des daraus durch Aufschäumen gebildeten Schaumstoffes erzielen lassen.

So erfolgt bei der bestimmungsgemäßen Verwendung nach Zugabe der Isocyanatkomponente (B) zu der erfindungsgemäßen Polyolkomponente (A) eine Koagulation und Ausfällung des Polymers der Polymerdispersion, was zur Folge hat, daß der sich bildende Schaum sehr schnell eine ausreichende Standfestigkeit annimmt, nicht tropft und nicht verläuft. Dies ist für die Anwendung des erfindungsgemäßen Zweikomponenten-Schaums als Ortsschaum besonders vorteilhaft, insbesondere beim Befestigen von Türzargen, Fensterstöcken oder Fassadenelementen, weil hierdurch schnell die erforderliche Festigkeit des Schaums erreicht wird.

Weiterhin hat sich erwiesen, daß bei der Koagulation und Ausfällung des Polymers der wässrigen Polymerdispersion in dem aufschäumenden Schaum das aus der wässrigen Dispersion ausgefällte Polymer in Richtung der Schaumexpansion verstreckt wird. Dies führt zu einer anisotropen, faserartigen Struktur des Schaums, so daß die Festigkeitseigenschaften des Schaums in den verschiedenen Raumrichtungen unterschiedlich eingestellt werden können. In Abhängigkeit von der Geometrie der umgebenden Form in der das Schaumsystem aufgeschäumt wird, wird es in dieser Weise möglich, gezielt die Stabilität des Schaumstoffs in einer bestimmten Richtung zu erhöhen. So kann man beispielsweise durch Aufschäumen des Schaums in einer länglichen Form einen Schaumstoff erhalten, der in der Längsrichtung des länglichen Behälters eine höhere Festigkeit aufweist als in der Querrichtung.

Andererseits ergibt sich eine überraschende Verbesserung der Brandfestigkeit dadurch, daß im Brandfall der abgebrannte Schaum eine stabile Aschekruste hinterläßt, welche die weitere Ausbreitung des Feuers hindert, während Polyurethanschaumstoffe, die ohne den erfindungsgemäßen Zusatz einer wässrigen Polymerdispersion aufgeschäumt worden sind, unter den gleichen Bedingungen rückstandslos verbrennen.

Im Gegensatz zu den Methoden des oben angesprochenen Standes der Technik, gemäß denen ein fertiger Polyurethanschaum mit einem Bindemittel, wie einem carboxylgruppenhaltigen Acrylsäureestercopolymer oder einer Kunststoffdispersion imprägniert oder getränkt wird, erfolgt beim bestimmungsgemäßen Aufschäumen des erfindungsgemäßen Zweikomponenten-Schaumsystems ein Einbau des Polymers der in der Polyolkomponente vorhandenen wässrigen Polymerdispersion in die Struktur des erzeugten Polyurethanschaums, wodurch dessen Eigenschaften namentlich im Hinblick auf das Brandschutzverhalten und die mechanischen Eigenschaften in überraschender Weise verbessert werden.

So ergeben sich durch den Einbau des Polymers der wässrigen Polymerdispersion in das Polyurethanschaumsystem sehr gute Brandeigenschaften ohne den Zusatz von weiteren Brandschutzadditiven oder Füllstoffen. Durch Zugabe von verhältnismäßig geringen Mengen solcher Additive kann jedoch die Brandschutzwirkung der bisher existierenden Brandschutzschäume deutlich übertroffen werden. In dieser Weise wird es möglich, mit dem erfindungsgemäßen Zweikomponenten-Schaumsystem bei geringerer Einbautiefe die gleiche Feuerwiderstandsdauer zu erreichen wie bei Verwendung herkömmlicher Brandschutzschäume. Der Einsatz des erfindungsgemäßen Zweikomponenten-Schaumsystems ist daher auch für sehr dünne Brandschutzwände und -decken möglich.

Es hat sich weiterhin gezeigt, dass das erfindungsgemäße Zweikomponenten-Schaumsystem einen ausgehärteten Polyurethanschaumstoff ergibt, der offenbar aufgrund der Anwesenheit des in die Schaumstoffstruktur eingearbeiteten Polymers der wässrigen Polymerdispersion im Brandfall eine außerordentlich stabile Aschekruste liefert, welche für die verbesserten Brandschutzeigenschaften verantwortlich ist.

Durch den Einsatz kostengünstiger Ausgangsmaterialien und gegebenenfalls geringer Mengen von Brandschutzadditiven lassen sich die Material- und Herstellungskosten vergleichsweise niedrig halten. Des weiteren lassen sich bei der Anwendung Materialkosten einsparen, da die angestrebte Feuerwiderstandsdauer im Vergleich zu herkömmmlichen Brandschutzschäumen schon bei geringerer Einbautiefe erreicht wird.

Weiterhin liegt die Viskosität der Polyolkomponente des erfindungsgemäßen Zweikomponenten-Schaumsystems aufgrund des geringeren Zusatzes an festen Füllstoffen sowie wegen des erhöhten Wasseranteils erheblich niedriger als bei herkömmlichen Schaumsystemen dieser Art. Hierdurch wird die Verarbeitung erheblich vereinfacht, da der Kraftaufwand beim manuellen und maschinellen Ausbringen der in zwei getrennten Behältern vorliegenden Komponenten des Zweikomponenten-Schaumsystems deutlich verringert ist.

Durch Variation des Verhältnisses von Polyolkomponente zur Isocyanatkomponente kann sowohl ein Hartschaum als auch ein flexibler Weichschaum hergestellt werden. Der Schaum ist daher insbesondere zur Ausfüllung von Brandschutzfugen einsetzbar. Erfindungsgemäß ist der Anteil der Polyisocyanatkomponente niedriger als bei herkömmlichen Polyurethanschäumen, was eine mögliche Gesundheitsgefährdung sowohl bei der Herstellung und der Verpackung als auch der Verarbeitung des Schaums verringert.

Bevorzugte Polymere der wässrigen Polymerdispersion sind Poly(methacrylsäurealkylester), Poly(acrylsäurealkylester), Poly(methacrylsäure arylester), Poly(acrylsäurearylester), wobei die Alkylgruppen 1 bis 18 Kohlenstoffatome, vorzugsweise 1 bis 6 Kohlenstoffatome aufweisen und als Arylreste unsubstituierte oder substituierte Phenylreste oder Naphthylreste enthalten sind, sowie Copolymere dieser Polymeren mit n-Butylacrylat und/oder Styrol.

Einer bevorzugten Ausführungsform der Erfindung zufolge enthält die Polyolkomponente (A) 20 bis 300 Gewichtsteile, vorzugsweise 50 bis 150 Gewichtsteile des Polymers beziehungsweise der Polymere der zugesetzten wässrigen Polymerdispersion pro 100 Gewichtsteile der Polyole, die in der Polyolkomponente (A) enthalten sind.

Die wässrige Polymerdispersion besitzt vorzugsweise einen Wassergehalt von 5 bis 80 Gew.-%, vorzugsweise 20 bis 60 Gew.-%, beispielsweise 70 Gew.-%, und ist gemäß der Erfindung in einer solchen Menge in der Polyolkomponente (A) enthalten, daß sich ein Wasseranteil in der Polyolkomponente (A) von 20 bis 60 Gewichtsteilen pro 100 Gewichtsteile des Polyols beziehungsweise der Polyole in der Polyolkomponente (A) ergibt. Diese Wassermenge ist größer als die Menge, die erforderlich ist beim Aufschäumen des beziehungsweise der Polyole mit der Polyisocyanatkomponente, um das gewünschte Aufschäumen des Polyurethans zu bewirken.

Gemäß einer bevorzugten Ausführungsform der Erfindung enthält die Polyolkomponente (A) als Polyol mindestens einen Vertreter der geradkettige und verzweigte, aliphatische, aromatische und/oder araliphatische, monomere oder polymere Polyole, Polyesterpolyole, Polyetherpolyole, Fettsäurepolyesterpolyole, Aminopolyole und halogenierte Polyole umfassenden Gruppe, vorzugsweise mit Molekulargewichten im Bereich von 200 bis 10.000 und 2 bis 6 Hydroxylgruppen, insbesondere Polyethylenglykol, Polypropylenglykol und Polybutylenglykol mit einem zahlenmittleren Molekulargewicht von 200 bis 3000, vorzugsweise von 300 bis 600, Polyesterpolyole und/oder Polyetherpolyole mit einer Funktionalität von 1,5 bis 5 und einer OH-Zahl von 100 bis 700, während die Polyisocyanatkomponente (B) vorzugsweise ein Polyisocyanat mit einer Funktionalität von gleich oder größer als 2 und einem NCO-Gehalt von 20 bis 40% enthält.

Weiterhin ist es erfindungsgemäß vorteilhaft, dass die Polyolkomponente (A) den mindestens einen Zellstabilisator für den zu bildenden Schaum in einer Menge von 0,1 bis 1,5 Gew.-% enthält.

Zur weiteren Steigerung des Brandverhaltens des aufgeschäumten Schaumsystems enthält die Polyolkomponente (A) des erfindungsgemäßen Zweikomponenten-Schaumsystems vorzugsweise ein intumeszierendes Material, beispielsweise Blähgraphit, expandierbaren Perlit und/oder Vermiculit, insbesondere mit Schwefelsäure interkalierter Graphit, oder aber die Ausgangsmaterialien für chemisch intumeszierende Massen, wie Melamin und Melaminderivate, Polyphosphate, Natriumsilikat und Kohlenstoffquellen.

Als Katalysator für die Reaktion des Polyols mit dem Polyisocyanat kann die Polyolkomponente (A) des erfindungsgemäßen Schaumsystems ein aromatisches, heteroaromatisches und/oder aliphatisches, sekundäres oder tertiäres Amin und/oder eine metallorganische Verbindung eines Metalls aus der Zn, Sn, Mn, Mg, Bi, Sb, Pb und Ca umfassenden Gruppe, insbesondere ein Octoat, Naphthenat oder Acetylacetonat eines dieser Metalle enthalten. Besonders bevorzugte Katalysatoren sind Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanolhexylamin, Diethanolcyclohexylamin, Diethanolphenylamin sowie deren Ethoxylierungs- und Propoxylierungsprodukte, Diazabicyclooctan, insbesondere 1,4-Diazabicyclo[2.2.2]octan, Triethylamin, Dimethylbenzylamin, Bis(Dimethylaminoethyl)-ether, Tetramethylguanidin, Bis-Dimethylaminomethyl-phenol, 2,2-Dimorpholinodiethylether, 2-(2-Dimethylaminoethoxy)-ethanol, 2-Dimethylaminoethyl-3-dimethylaminopropylether, Bis(2-Dimethylaminoethyl)-ether, N,N-Dimethylpiperazin, N-(2-Hydroxyethoxyethyl)-2-azanorbonan, N,N,N,N-Tetramethylbutan-1,3-diamin, N,N,N,N-Tetramethylpropan-1,3-diamin, N,N,N,N-Tetramethylhexan-1,6-diamin, 1-Methylimidazol, 2-Methyl-1-vinylimidazol, 1-Allylimidazol, 1-Phenylimidazol, 1,2,4,5-Tetramethylimidazol, 1-(3-Aminopropyl)-imidazol, Pyrimidazol, 4-Dimethylamino-pyridin, 4-Pyrolidinopyridin, 4-Morpholinopyridin, 4-Methylpyridin, N-Dodecyl-2-methylimidazol, sowie Zinn(II)-Salze von Carbonsäuren, starke Basen, und wie Alkalihydroxide, Alkalialkoholate und Alkaliphenolate, namentlich Di-n-Octyl-zinnmercaptid, Dibutylzinn-maleat, -diacetat, -dilaurat, -dichlorid, -bisdodecylmercaptid, Zinn(II)-acetat, -ethylhexoat und -diethylhexoat sowie Bleiphenylethyl-dithiocarbaminat.

Vorzugsweise enthält die Polyisocyanatkomponente (B) des erfindungsgemäßen Zweikomponenten-Schaumsystems ein Polyisocyanat, das aus der aliphatische, cycloaliphatische, araliphatische, aromatische und heterocyclische Polyisocyanate umfassenden Gruppe ausgewählt ist, insbesondere Phenylisocyanat, 1,5-Naphthylendiisocyanat, 2,4- oder 4,4'-Methylendi(phenylisocyanat) (MDI), hydriertes MDI, Xylendiisocyanat (XDI), m- und p-Tetramethylxylendiisocyanat, 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats, chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat, Dicyclohexylmethandiisocyanat, Cyclohexan-1,4-diisocyanat, Ethylendiisocyanat, Phthalsäure-bisisocyanatoethylester, 1-Chlormethylphenyl-2,4-diisocyanat, 1-Brommethylphenyl-2,6-diisocyanat, 3,3-Bis-chlormethylether-4,4-diphenyldiisocyanat, Trimethylhexamethylendiisocyanat, 1,4-Diisocyanatobutan, 1,12-Diisocyanatododecan und dimeres oder oligomeres 2,4- oder 2,6-Toluylendiisocyanat, 2,4'- oder 4,4'-Methylendi(phenylisocyanat), Isopropylidendiisocyanat und/oder Hexamethylendiisocyanat und/oder Mischungen dieser Isocyanate.

Vorzugsweise können die Polyolkomponente (A) und/oder die Polyisocyanatkomponente (B) ein Treibmittel auf der Grundlage eines verdichteten oder verflüssigten Gases, wie Luft, Stickstoff, Kohlendioxid, Distickstoffoxid, eines Fluorkohlenwasserstoffs, wie 1,1,1,2-Tetrafluorethan oder 1,1,1,2,3,3,3-Heptafluoropropan, Dimethylether, Butan, Propan oder Mischungen davon enthalten, um die Aufschäumwirkung, die durch die Anwesenheit des Wassers in der Polyolkomponente (A) bereits erreicht wird, weiter zu verstärken.

Weiterhin ist es erfindungsgemäß möglich, entweder der Polyolkomponente (A) oder aber auch der Polyisocyanatkomponente (B) oder beiden Bestandteilen ein übliches organisches oder anorganisches Flammschutzmittel in einer Gesamtmenge von 0,1 bis 20 Gew.-%, vorzugsweise 0,5 bis 5 Gew.-% zuzusetzen.

Als Flammschutzmittel dieser Art können roter Phosphor, Phosphorverbindungen, insbesondere Triethylphosphat, Triphenylphosphat und/oder halogenierte Phosphorsäureester, wie Trichlorethylphosphat, Tris(2-chlorisopropyl)-phos phat oder Tris(2-chlorethyl)-phosphat, Metallhydroxide, insbesondere Aluminiumhydroxid oder Magnesiumhydroxid, Zinkborat, Ammoniumpolyphosphat und/oder Antimonoxid zugesetzt werden.

Gemäß einer weiteren bevorzugten Ausführungsform der Erfindung enthält die Polyolkomponente (A) des erfindungsgemäßen Zweikomponenten-Schaumsys tems ein Mittel, das die Koagulation der Polymerdispersion beschleunigt. Es hat sich überraschenderweise gezeigt, daß solche Koagulationsmittel in die Polyolkomponente (A) eingearbeitet werden können ohne dass eine Koagulation der darin vorliegenden Polymerdispersion erfolgt, was offenbar eine Folge der Tatsache ist, dass das vorhandene Polyol die Koagulationsreaktion inhibiert. Erst nach Zugabe der Isocyanatkomponente (B) erfolgt die durch das Koagulationsmittel beschleunigte Koagulation und Ausfällung des Polymers der Polymerdispersion, was zur Folge hat, daß der sich bildende Schaum noch schneller eine ausreichende Standfestigkeit aufweist, nicht tropft und nicht verläuft.

Durch den Zusatz des Mittels zur Beschleunigung der Koagulation der wässrigen Polymerdispersion läßt sich die Ausfällung und Koagulation des Polymers in dem aufschäumenden Schaum beschleunigen und damit die Beeinflussung der Festigkeitseigenschaften des Schaums noch gezielter erreichen.

Als erfindungsgemäß geeignete Mittel zur Beschleunigung der Ausfällung und Koagulation des Polymers aus der wässrigen Polymerdispersion lassen sich feinteilige Feststoffe, Salze oder Oxid mehrwertiger Metalle, wie eines Metalls der Erdalkalielemente, von Zink, Aluminium oder Eisen, oder eine organische Säure verwenden. Besonders bevorzugte Salze dieser Art sind Calciumnitrat, Zinknitrat, Zinkoxid, Aluminiumsulfat, Aluminiumchlorid, Eisensulfat und Eisenchlorid verwenden. Die Teilchengröße der feinteiligen Feststoffe erstreckt sich vorzugsweise von 50 nm bis 1 mm, bevorzugt 10 µm bis 0,1 mm.

Weiterhin sind als Mittel zur Beschleunigung der Ausfällung und Koagulation der wässrigen Polymerdispersion Verbindungen geeignet, die eine Erniedrigung des pH-Wertes zur Folge haben, wie Carbonsäuren, beispielsweise Ameisensäure, Essigsäure, oder aber auch Polyacrylamid. Ein besonders bevorzugtes Mittel zur Koagulation der wässrigen Polymerdispersion ist Ammoniumpolyphosphat, welches den zusätzlichen Vorteil besitzt, auch als Brandschutzadditiv zu wirken.

Weiterhin sind auch feinteilige anorganische und/oder organische Füllstoffe als Mittel zur Beschleunigung der Ausfällung und Koagulation des Polymers aus der wässrigen Polymerdispersion geeignet, wie anorganische Füllstoffe ausgewählt aus der Metalloxide, Borate, Carbonate, vorzugsweise Kreide, Silikate, Kaolin, Glaspulver, Eisenoxid, Titandioxid, Siliciumdioxid, anorganische Schäume, vorzugsweise geschäumten Blähton, geschäumten Perlit und geschäumten Vermiculit, und/oder Hohlkügelchen aus silikatischem Material oder Glas umfassenden Gruppe, und organische Füllstoffe auf der Grundlage von teilchen- und/oder faserförmigen pflanzlichen und/oder tierischen Polymeren, insbesondere auf der Grundlage von Kartoffeln, Mais, Reis, Getreide, Holz, Kork, Papier, Leder, Cellulose, Hanf, Baumwolle und Wolle, vorzugsweise Stärke.

Diese Mittel zur Koagulation der wässrigen Polymerdispersion können erfindungsgemäß mit Koagulierhilfsmitteln kombiniert werden, beispielsweise Ester-Alkoholen, wie 2,2,4-Trimethyl-1,3-pentandiol-monoisobutyrat, oder aber auch mit Glykolen.

Darüber hinaus ist es möglich, der Polyolkomponente (A) und/oder der Polyisocyanatkomponente (B) zur Steuerung des rheologischen Verhaltens und der Viskosität ein Thixotropiermittel und/oder ein Verdünnungs- oder Lösemittel zuzugeben. Erfindungsgemäß bevorzugte Thixotropiermittel sind Kieselsäure, Schichtsilikate, insbesondere synthetisches Magnesiumschichtsilikat, aktivierter Bentonit, Sepionit oder Attapulgit, Polyethylenwachs und/oder CelluloseDerivate, beispielsweise Hydroxyethylcellulose.

Erfindungsgemäß ist es weiterhin möglich, der Polyolkomponente (A) und/oder der Polyisocyanatkomponente (B) zusätzlich mindestens einen anorganischen und/oder organischen Füllstoff zuzusetzen, um sowohl die Verarbeitungseigenschaften des Zweikomponenten-Schaumsystems als auch die Eigenschaften des aus dem Schaumsystem aufgeschäumten Schaumstoffes zu steuern. Vorzugsweise verwendet man als anorganische Füllstoffe Metalloxide, Borate, Carbonate, vorzugsweise Kreide, Silicate, Kaolin, Glaspulver, Eisenoxid, Titandioxid, Siliciumdioxid, anorganische Schäume, vorzugsweise geschäumten Blähton, geschäumten Perlit und geschäumten Vermiculit, und/oder Hohlkügelchen aus silikatischem Material oder Glas.

Als organischen Füllstoff kann man dem erfindungsgemäßen Zweikomponenten-Schaumsystem ein teilchen- und/oder faserförmiges pflanzliches und/oder tierisches Polymer, insbesondere auf der Grundlage von Kartoffeln, Mais, Reis, Getreide, Holz, Kork, Papier, Leder, Cellulose, Hanf, Baumwolle und Wolle, vorzugsweise Stärke, zusetzen.

Schließlich ist es möglich, in die Polyolkomponente (A) und/oder die Polyisocyanatkomponente (B) zusätzlich an sich bekannte Hilfs- und Zusatzstoffe, Stabilisatoren, Weichmacher, Katalysatoren, Lösungsmittel, Pigmente und/oder Farbstoffe einzubringen. Als Weichmacher kann ein Ester auf Basis von Phthalsäure, Adipinsäure, Sebacinsäure, Phosphorsäure, Citronensäure oder einer Fettsäure eingesetzt werden.

Gemäß einer weiteren bevorzugten Ausführungsform sind die Polyolkomponente (A) und die Polyisocyanatkomponente (B) des erfindungsgemäßen Zweikomponenten-Schaumsystems in einer Zwei- oder Mehrkammervorrichtung reaktionsinhibierend getrennt und unter Anwendungsbedingungen unter Einhaltung eines Verhältnisses der NCO-Gruppen des Polyisocyanats beziehungsweise der Polyisocyanate zu den OH-Gruppen des Polyols beziehungsweise der Polyole von 1:5 bis 10: 1, vorzugsweise 1:1 bis 2:1, zur Reaktion bringbar enthalten. Bei der bestimmungsgemäßen Anwendung des Zweikomponenten-Schaumsystems werden dann die in den getrennten Behältern der Zwei- oder Mehrkammervorrichtung vorliegenden Komponenten unter Einwirkung mechanischer Kräfte oder unter Einwirkung des in den Komponenten vorhandenen Treibmittels vorzugsweise durch eine Mischdüse ausgepresst und entweder in eine Form extrudiert und dort aufgeschäumt oder aber vor Ort an der Baustelle in die zu verschließenden Öffnungen eingebracht, aufgeschäumt und ausgehärtet.

Die Erfindung betrifft demzufolge auch die Verwendung des oben beschriebenen Zweikomponenten-Schaumsystems zum Ausschäumen von Öffnungen, Kabel- und Rohrdurchführungen in Wänden, Böden und/oder Decken, von Fugen zwischen Decken- und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke der Befestigung, der Wärmeisolation und/oder des Brandschutzes.

Die folgenden Beispiele dienen der weiteren Erläuterung der Erfindung ohne sie jedoch einzuschränken.

### Beispiel 1

In der folgenden Tabelle 1 sind die Bestandteile der Polyolkomponente (A) und der Polyisocyanatkomponente (B) des Zweikomponenten-Schaumsystems dieses Beispiels 1 aufgeführt:

| **Tabelle 1** | | |
|---|---|---|
| **Polyolkomponente (A)** | | **Gew.-%** |
| wässrige Dispersion eines Acrylsäure-estercopolymers | Acronal V271 | 25 |
| Polyethylenglykol (MG 600) | Pluracol E 600 | 26,5 |
| Alkylphenolethoxylat | Emulan OP 25 | 3,5 |
| Ammoniumpolyphosphat | APP 422 | 3,5 |
| Blähgraphit (Graphit interkaliert mit Schwefelsäure) | Nord-Min 249 | 4,8 |
| Vermiculit 0.3-1 mm | Vermiculit | 6 |
| Eisenoxid | Bayferrox | 3,1 |
| Kokosnußschalenmehl | Coconit 300 | 8,6 |
| | | |

| **Polyisocyanatkomponente (B)** | | |
|---|---|---|
| Polymeres Isocyanat (4,4'-Methylendi-(phenylisocyanat) (MDI) | Voranate M220 | 19 |
| | | **100,0** |
| | | |

Zur Herstellung der Polyolkomponente (A) vermischt man zunächst die wäßrige Dispersion des Acrylsäureestercopolymers mit dem Polyethylenglykol, setzt dann die übrigen flüssigen Bestandteile unter Durchmischen zu und rührt schließlich die Feststoffe unter.

Die Polyolkomponente (A) und die Polyisocyanatkomponente (B) werden dann in getrennte Behälter einer Zweikammer-Vorrichtung eingebracht.

Beim Vermischen der beiden Komponenten schäumt die Masse auf. Das Zusammenführen und das Vermischen kann in einem Becher mittels eines Spatels erfolgen oder aus der Mehrkammer-Vorrichtung über einen aufgeschraubten Statik-Mischer oder mit Hilfe einer Zweikomponenten-Misch- oder Dosieranlage.

Beim Vermischen der beiden Komponenten entweder beim Auspressen aus einer Zweikammer-Vorrichtung oder durch Verrühren der beiden Komponenten erfolgt sehr schnell - entsprechend einer Gelzeit von etwa 15 Sekunden - ein starker Anstieg der Viskosität, der darauf zurückzuführen ist, dass die Polymerdispersion ausfällt und unter Bildung eines Gels koaguliert.

Aufgrund dieser Gelbildung zeigt das aufschäumende Schaummaterial bereits nach etwa 15 Sekunden eine sehr hohe Standfestigkeit, tropft und verläuft nicht.

Diese Eigenschaft ist für die Anwendung des Zweikomponenten-Schaumsystems vor Ort auf der Baustelle sehr erwünscht, beispielsweise beim Befestigen von Türzargen. Zu diesem Zweck wird der Schaum zwischen Wand und Türzarge eingebracht. Während herkömmliche Zweikomponenten-Polyurethan-schäume eine ausreichende Standfestigkeit nur dadurch erreichen, dass der Auspressvorgang so stark verlangsamt wird, dass der Schaum bereits im Mischer expandiert und polymerisiert, was zu einer längeren Arbeitszeit und häufig zum Verstopfen der Mischeinrichtung führt, ergibt sich erfindungsgemäß durch den Zusatz der wäßrigen Polymerdispersion zu der Polyolkomponente (A) des Schaumsystems eine sehr hohe frühe Standfestigkeit, so dass eine zügige Verarbeitung des Zweikomponentenschaums ohne weiteres möglich ist.

Hinzu kommt, dass das aus der wäßrigen Dispersion ausgefällte und koagulierte Polymer der wäßrigen Polymerdispersion in Richtung der Schaumexpansion verstreckt wird, was zu einer anisotropen, faserartigen Struktur des Schaums führt. In Abhängigkeit von der Geometrie der umgebenden Form können so unterschiedliche Festigkeiten in unterschiedlichen Raumrichtungen gezielt erreicht werden.

Der durch Aufschäumen des Zweikomponenten-Schaumsystems dieses Beispiels 1 erhaltene Weichschaumstoff zeigt nach der Gelzeit eine Startzeit von 55 Sekunden und eine Stoppzeit von 450 Sekunden und liefert einen Schaum mit einer Dichte von 140 kg/m³.

Nach dem Aushärten wird die Brandwiderstandsdauer unter Anwendung der Einheits-Temperatur/Zeit-Kurve gemäß der DIN-Vorschrift 4102 Teil 2 gemessen bei einem Überdruck im Ofen von 10 Pa. Bei diesem Test wird der Schaum in eine Öffnung der Decke oder Wand eines Brandofens eingebaut. Im Inneren des Brandofens wird eine Flamme entzündet, die so geregelt wird, daß die Temperaturen in dem Ofen dem in dieser Vorschrift genannten sogenannten "Einheitstemperaturprofil" folgen. Dies bedeutet beispielsweise, daß nach 30 Minuten eine Temperatur von etwa 850°C und nach 60 Minuten eine Temperatur von 925°C etc. erreicht wird. Man bestimmt dann die Feuerwiderstandsdauer, das heißt die Zeitdauer, während der der Feuerdurchtritt vom Inneren des Ofens an die Außenseite verhindert wird. Während der Prüfdauer darf weder eine Flamme von außen sichtbar sein noch die Temperatur an der Außenseite des Materials einen Wert von 180 K über Raumtemperatur überschreiten. Auch ein an die Oberfläche des Materials gehaltener Wattebausch darf sich nicht entzünden.

Die in der obigen Weise gemessene Feuerwiderstandsdauer bei einer Einbautiefe von 15 cm beträgt 120 Minuten bei einer Temperaturdifferenz zur Raumtemperatur auf der Außenseite des Materials von lediglich 52 K.

Zu Vergleichszwecken wird ein von der Anmelderin unter der Bezeichnung Hilti CP 657 vertriebener handelsüblicher flexibler Brandschutzschaum mit einer Dichte von 260 kg/m³ bei einer Einbautiefe von 15 cm unter den gleichen Bedingungen geprüft, wobei dieses Material bereits nach 60 Minuten eine Temperaturdifferenz zur Raumtemperatur auf der Außenseite von 74 K erreicht. Damit ist aber ersichtlich, dass das erfindungsgemäße Zweikomponenten-Schaumsystem deutlich überlegene Wärmeisolationseigenschaften aufweist.

### Beispiel 2

Die Bestandteile für die Herstellung der Polyolkomponente (A) und der Polyisocyanatkomponente (B) sind in der nachfolgenden Tabelle 2 aufgeführt:

| **Tabelle 2** | | **Gew.-%** |
|---|---|---|
| **Polyolkomponente (A)** | | |
| wässrige Dispersion eines Acrylsäure-estercopolymers (38 Gew.-% Wasser) | Primal 2620 | 35,6 |
| Polyethylenglykol (MG 600) | Pluracol E 600 | 34 |
| Alkylphenolethoxylat | Emulan OP 25 | 5 |
| | | |

| **Polyisocyanatkomponente (B)** | | |
|---|---|---|
| Polymeres Isocyanat (4,4'-Methylendi-(phenylisocyanat) (MDI) | Voranate M220 | 25,4 |
| | | **100,0** |
| | | |

Man vermischt zunächst die Bestandteile der Polyolkomponente (A) in einem Becherglas durch inniges Verrühren. Dann gibt man die Polyisocyanatkomponente (B) zu und mischt sofort gut durch. Nach 25 Sekunden beobachtet man eine Gelbildung in der Mischung und nach 80 Sekunden beginnt eine Expansion der Masse, die nach 6 Minuten vollständig abgeschlossen ist. Es ergibt sich ein flexibler Schaum mit einem Raumgewicht von 71 g/l.

Bei dieser Formulierung sind in der Mischung 39 Gewichtsteile Wasser und 64 Gewichtsteile dispergiertes Polymer pro 100 Gewichtsteile Polyol enthalten. Die Wassermenge wäre für die Bildung von 17 1 CO₂ pro 100 g Schaum ausreichend. Bezieht man die Isocyanatkomponente, die für diese Reaktion als Reaktionspartner benötigt wird, ein, könnten 4,2 l CO₂ entstehen. Demzufolge ist das Wasser in vierfachem Überschuß über die für das Ausschäumen erforderliche Menge vorhanden.

Man beobachtet aber lediglich ein Volumen des Schaums nach dem Expandieren von 1,4 l pro 100 g Schaum. Da ausgeschlossen werden kann, daß größere Anteile des CO₂ aus den Schaumporen entweichen, da das gesamte entweichende CO₂ in einem gesonderten Versuch aufgefangen wurde und lediglich 0,5 l pro 100 g Schaum beträgt, zeigen diese Versuche, daß lediglich ein geringer Anteil, in diesem Fall etwa 10 Gew.-% des vorhandenen Wassers, zu CO₂ umgesetzt wird und damit für die Schaumbildung erforderlich sind. Es ist daher überraschenderweise nicht nötig, den Wassergehalt der Polyolkomponente zu reduzieren, um die CO₂-Bildung zu regulieren, da sich in jedem Fall erfindungsgemäß ein Polyurethanschaum mit hervorragenden Eigenschaften ergibt.

Bei dem Brandtest zeigt dieses Material eine sehr stabile Aschekruste, während ein in analoger Weise hergestellter Polyurethanschaumstoff ohne den Zusatz der wässrigen Dispersion des Acrylsäureester-Copolymers rückstandslos verbrennt.

## Patentansprüche

1. Zweikomponenten-Schaumsystem zur Herstellung von Schäumen für Bauzwecke, mit einer **Polyolkomponente (A),** die mindestens ein Polyol, gegebenenfalls einen Katalysator für die Reaktion des Polyols mit dem Polyisocyanat und eine wässrige Polymerdispersion als Schaumbildner enthält, und einer **Polyisocyanatkomponente (B),** die mindestens ein Polyisocyanat enthält, wobei die Mengenverhältnisse von Polyol(en) und Polyisocyanat(en) so abgestimmt sind, daß sich beim bestimmungsgemäßen Vermischen der Polyolkomponente (A) mit der Polyisocyanatkomponente (B) ein Molverhältnis von Isocyanatgruppen des Polyisocyanats zu OH-Gruppen der Polyole (NCO:OH-Verhältnis) von 1:5 bis 10:1, vorzugsweise von 1:1 bis 2:1 ergibt, **dadurch gekennzeichnet, daß** die wässrige Polymerdispersion in einer solchen Menge in der Polyolkomponente (A) enthalten ist, daß sich ein Wasseranteil in der Polyolkomponente (A) von 20 bis 60 Gewichtsteilen pro 100 Gewichtsteile des beziehungsweise der Polyole der Polyolkomponente (A) ergibt, die wässrige Polymerdispersion als Polymer mindestens einen Vertreter der Polyurethane, Polyvinylacetate, Polyvinylether, Polyvinylpropionate, Polystyrole, natürliche oder synthetische Kautschuke, Poly((meth)acrylate) und Homo- und Copolymere auf der Grundlage von (Meth)acrylaten, Acrylnitril, Vinylestern Vinylethern, Vinylchlorid und/oder Styrol umfassenden Gruppe enthält und die Polyolkomponente (A) mindestens einen Zellstabilisator in einer Menge von 0,01 bis 5 Gew.-% ausgewählt aus der alkoxylierte Fettsäuren, ethoxylierte (C₁-C₁₈)-Alkylphenole und/oder ethoxyliertes Rizinusöl umfassenden Gruppe enthält.

2. Zweikomponenten-Schaumsystem nach Anspruch 1, **dadurch gekennzeichnet, daß** die wässrige Polymerdispersion als Polymer Poly(methacrylsäurealkylester), Poly(acrylsäurealkylester), Poly(methacrylsäurearylester), Poly(acrylsäurearylester) und/oder Copolymere davon mit n-Butylacrylat und/oder Styrol enthält.

3. Zweikomponenten-Schaumsystem nach mindestens einem der Ansprüche 1 oder 2, **dadurch gekennzeichnet, daß** die Polyolkomponente (A) 20 bis 300 Gewichtsteile, vorzugsweise 50 bis 150 Gewichtsteile, des beziehungsweise der Polymere der wäßrigen Polymerdispersion pro 100 Gewichtsteile des beziehungsweise der Polyole der Polyolkomponente (A) enthält.

4. Zweikomponenten-Schaumsystem nach mindestens einem der Ansprüche 1 bis 3, **dadurch gekennzeichnet, daß** die wässrige Polymerdispersion einen Wassergehalt von 5 bis 80 Gew.-%, vorzugsweise von 20 bis 6 0 Gew.-% aufweist.

5. Zweikomponenten-Schaumsystem nach mindestens einem der Ansprüche 1 bis 4, **dadurch gekennzeichnet, daß** die Polyolkomponente (A) als Polyol mindestens einen Vertreter der geradkettige und verzweigte, aliphatische, aromatische und/oder araliphatische, monomere oder polymere Polyole, Polyesterpolyole, Polyetherpolyole, Fettsäurepolyesterpolyole, Aminopolyole und halogenierte Polyole umfassenden Gruppe, vorzugsweise mit Molekulargewichten im Bereich von 200 bis 10.000 und 2 bis 6 Hydroxylgruppen, insbesondere Polyethylenglykol, Polypropylenglykol und Polybutylenglykol mit einem zahlenmittleren Molekulargewicht von 200 bis 3000, vorzugsweise von 300 bis 600, Polyesterpolyole und/oder Polyetherpolyole mit einer Funktionalität von 1, 5 bis 5 und einer OH-Zahl von 100 bis 700; und die Polyisocyanatkomponente (B) vorzugsweise ein Polyisocyanat mit einer Funktionalität von gleich oder größer als 2 und einem NCO-Gehalt von 20 bis 40% enthalten.

6. Zweikomponenten-Schaumsystem nach mindestens einem der vorhergehenden Ansprüche, **dadurch gekennzeichnet, daß** die Polyolkomponente (A) den Zellstabilisator in einer Menge von 0,1 bis 1,5 Gew.-% enthält.

7. Zweikomponenten-Schaumsystem nach mindestens einem der vorhergehenden Ansprüche, **dadurch gekennzeichnet, daß** die Polyolkomponente (A) mindestens ein intumeszierendes Material enthält.

8. Zweikomponenten-Schaumsystem nach Anspruch 7, **dadurch gekennzeichnet, daß** es als intumeszierendes Material Blähgraphit und/oder Vermiculit enthält.

9. Zweikomponenten-Schaumsystem nach mindestens einem der vorhergehenden Ansprüche, **dadurch gekennzeichnet, daß** die Polyolkomponente (A) als Katalysator für die Reaktion des Polyols mit dem Polyisocyanat ein aromatisches und/oder aliphatisches, sekundäres oder tertiäres Amin, eine metallorganische Verbindung eines Metalls aus der Zn, Sn, Mn, Mg, Bi, Sb, Pb und Ca umfassenden Gruppe, insbesondere ein Octoat, Naphthenat oder Acetylacetonat dieser Metalle enthält.

10. Zweikomponenten-Schaumsystem nach mindestens einem der vorhergehenden Ansprüche, **dadurch gekennzeichnet, daß** die Polyisocyanatkomponente (B) ein Polyisocyanat ausgewählt aus der aliphatische, cycloaliphatische, araliphatische, aromatische und heterocyclische Polyisocyanate umfassenden Gruppe, insbesondere 4,4'-Methylendi(phenylisocyanat), Toluylendiisocyanat, Isopropylidendiisocyanat, Hexamethylendiisocyanat und/oder ein Präpolymer oder Oligomer dieser Diisocyanate enthält.

11. Zweikomponenten-Schaumsystem nach mindestens einem der vorhergehenden Ansprüche, **dadurch gekennzeichnet, daß** die Polyolkomponente (A) und/oder die Polyisocyanatkomponente (B) ein Treibmittel auf der Grundlage eines verdichteten oder verflüssigten Gases, wie Luft, Stickstoff, Kohlendioxid, Distickstoffoxid, einen fluorierten Kohlenwasserstoff, wie 1,1,1,2-Tetrafluorethan oder 1,1,1,2,3,3,3-Heptafluoropropan, Dimethylether, Butan und/oder Propan enthält.

12. Zweikomponenten-Schaumsystem nach mindestens einem der vorhergehenden Ansprüche, **dadurch gekennzeichnet, daß** die Polyolkomponente (A) und/oder die Polyisocyanatkomponente (B) ein organisches oder anorganisches Flammschutzmittel enthält.

13. Zweikomponenten-Schaumsystem nach Anspruch 12, **dadurch gekennzeichnet, daß** es das organische oder anorganische Flammschutzmittel in einer Menge von 0,1 bis 20 Gew.-%, vorzugsweise von 0,5 bis 5 Gew.-% enthält.

14. Zweikomponenten-Schaumsystem nach Anspruch 12 oder 13, **dadurch gekennzeichnet, daß** als Flammschutzmittel roter Phosphor, eine Phosphorverbindung, insbesondere Triethylphosphat, Triphenylphosphat und/oder ein halogenierter Phosphorsäureester, wie Trichlorethylphosphat, Tris(2-chlorisopropyl)-phosphat, oder Tris(2-chlorethyl)-phosphat, ein Metallhydroxid, insbesondere Aluminiumhydroxid oder Magnesiumhydroxid, Zinkborat, Ammoniumpolyphosphat und/oder Antimonoxid enthalten ist.

15. Zweikomponenten-Schaumsystem nach mindestens einem der vorhergehenden Ansprüche, **dadurch gekennzeichnet, daß** die Polyolkomponente (A) ein Mittel zur Beschleunigung der Koagulation der Polymerdispersion enthält.

16. Zweikomponenten-Schaumsystem nach Anspruch 15, **dadurch gekennzeichnet, daß** die Polyolkomponente (A) als Mittel zur Beschleunigung der Koagulation einen feinteiligen Feststoff, ein Salz oder Oxid eines mehrwertigen Metalls, wie eines Metalls der Erdalkalielemente, von Zink, Aluminium oder Eisen, oder eine organische Säure enthält.

17. Zweikomponenten-Schaumsystem nach Anspruch 16, **dadurch gekennzeichnet, daß** die Polyolkomponente (A) als Mittel zur Beschleunigung der Koagulation mindestens einen feinteiligen anorganischen und/oder organischen Füllstoff enthält.

18. Zweikomponenten-Schaumsystem nach Anspruch 17, **dadurch gekennzeichnet, daß** die Polyolkomponente (A) als Mittel zur Beschleunigung der Koagulation mindestens einen feinteiligen anorganischen Füllstoff ausgewählt aus der Metalloxide, Borate, Carbonate, vorzugsweise Kreide, Silikate, Kaolin, Glaspulver, Eisenoxid, Titandioxid, Siliciumdioxid, anorganische Schäume, vorzugsweise geschäumten Blähton, geschäumten Perlit und geschäumten Vermiculit, und/oder Hohlkügelchen aus silikatischem Material oder Glas umfassenden Gruppe enthält.

19. Zweikomponenten-Schaumsystem nach Anspruch 18, **dadurch gekennzeichnet, daß** die Polyolkomponente (A) als Mittel zur Beschleunigung der Koagulation mindestens ein teilchen- und/oder faserförmiges pflanzliches und/oder tierisches Polymer, insbesondere auf der Grundlage von Kartoffeln, Mais, Reis, Getreide, Holz, Kork, Papier, Leder, Cellulose, Hanf, Baumwolle und Wolle, vorzugsweise Stärke enthält.

20. Zweikomponenten-Schaumsystem nach Anspruch 19, **dadurch gekennzeichnet, daß** die Polyolkomponente (A) als Mittel zur Beschleunigung der Koagulation Calciumnitrat, Zinknitrat, Zinkoxid, Aluminiumsulfat, Aluminiumchlorid, Eisensulfat, Eisenchlorid, Ameisensäure, Essigsäure, Polyacrylamid und insbesondere Ammoniumpolyphosphat enthält.

21. Zweikomponenten-Schaumsystem nach den Ansprüchen 15 bis 20, **dadurch gekennzeichnet, daß** die Polyolkomponente (A) zusätzlich ein koagulierendes Hilfsmittel enthält, vorzugsweise einen Ester-Alkohol oder ein Glykol, vorzugsweise 2,2,4-Trimethyl-1,3-pentandiol-monoisobutirat enthält.

22. Zweikomponenten-Schaumsystem nach mindestens einem der vorhergehenden Ansprüche, **dadurch gekennzeichnet, daß** die Polyolkomponente (A) und/oder die Polyisocyanatkomponente (B) ein Thixotropiermittel und/oder ein Verdünnungs- oder Lösemittel enthält.

23. Zweikomponenten-Schaumsystem nach Anspruch 22, **dadurch gekennzeichnet, daß** als Thixotropiermittel Kieselsäure, ein Schichtsilikat, insbesondere ein synthetisches Magnesiumschichtsilikat, ein aktivierter Bentonit, Sepionit oder Attapulgit, ein Polyethylenwachs und/oder ein Cellulose-Derivat, beispielsweise Hydroxyethylcellulose enthalten ist.

24. Zweikomponenten-Schaumsystem nach Anspruch 23, **dadurch gekennzeichnet, daß** als Verdünnungs- oder Lösemittel ein aliphatischer Alkohol, wie Butanol oder Dipropylenglykol, enthalten ist.

25. Zweikomponenten-Schaumsystem nach mindestens einem der vorhergehenden Ansprüche, **dadurch gekennzeichnet, daß** die Polyolkomponente (A) und/oder die Polyisocyanatkomponente (B) zusätzlich mindestens einen anorganischen und/oder organischen Füllstoff enthält.

26. Zweikomponenten-Schaumsystem nach Anspruch 25, **dadurch gekennzeichnet, daß** es als anorganischen Füllstoff ein Metalloxid, ein Borat, ein Carbonat, vorzugsweise Kreide, ein Silikat, Kaolin, Glaspulver, Eisenoxid, Titandioxid, Siliciumdioxid, einen anorganischen Schaum, vorzugsweise geschäumten Blähton, geschäumten Perlit und geschäumten Vermiculit, und/oder Hohlkügelchen aus silikatischem Material oder Glas enthält.

27. Zweikomponenten-Schaumsystem nach Anspruch 26, **dadurch gekennzeichnet, daß** es als organischen Füllstoff ein teilchen- und/oder faserförmiges pflanzliches und/oder tierisches Polymer, insbesondere auf der Grundlage von Kartoffeln, Mais, Reis, Getreide, Holz, Kork, Papier, Leder, Cellulose, Hanf, Baumwolle und Wolle, vorzugsweise Stärke enthält.

28. Zweikomponenten-Schaumsystem nach mindestens einem der vorhergehenden Ansprüche, **dadurch gekennzeichnet, daß** die Polyolkomponente (A) und/oder die Polyisocyanatkomponente (B) zusätzlich an sich bekannte Hilfs- und Zusatzstoffe, Stabilisatoren, Weichmacher, Katalysatoren, Lösungsmittel, Pigmente und/oder Farbstoffe enthält.

29. Zweikomponenten-Schaumsystem nach Anspruch 28, **dadurch gekennzeichnet, daß** als Weichmacher ein Ester auf Basis von Phthalsäure, Adipinsäure, Sebacinsäure, Phosphorsäure, Citronensäure oder einer Fettsäure enthalten ist.

30. Zweikomponenten-Schaumsystem nach mindestens einem der vorhergehenden Ansprüche, **dadurch gekennzeichnet, daß** die Polyolkomponente (A) und die Polyisocyanatkomponente (B) in einer Zwei- oder Mehrkammervorrichtung reaktionsinhibierend getrennt und unter Anwendungsbedingungen unter Einhaltung eines Verhältnisses der NCO-Gruppen des beziehungsweise der Polyisocyanate zu den OH-Gruppen des beziehungsweise der Polyole von 1:5 bis 10:1 zur Reaktion bringbar enthalten sind.

31. Verwendung des Zweikomponenten-Schaumsystems nach den Ansprüchen 1 bis 30 zum Ausschäumen von Öffnungen, Kabel- und Rohrdurchführungen in Wänden, Böden und/oder Decken, von Fugen zwischen Decken- und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke der Befestigung, der Wärmeisolation und/oder des Brandschutzes.

## Claims

1. Two-component foam system for the production of foams for construction purposes, having a polyol component (A) which contains at least one polyol, a catalyst, if required, for reacting the polyol with the polyisocyanate, and an aqueous polymer dispersion as a foam-former, and a polyisocyanate component (B) which contains at least one polyisocyanate, the relative amounts of the polyol(s) and polyisocyanate(s) being so adjusted that, when the polyol component (A) is mixed with the polyisocyanate component (B) in the stipulated way, a molar ratio of the isocyanate groups in the polyisocyanate to the OH groups in the polyols (NCO:OH ratio) is obtained which is from 1:5 to 10:1 and preferably from 1:1 to 2:1, **characterised in that** the quantity of the aqueous polymer dispersion which is contained in the polyol component (A) is such that a proportion of water in the polyol component (A) is obtained which is from 20 to 60 parts by weight to 100 parts by weight of the polyol or polyols in the polyol component (A), the aqueous polymer dispersion contains, as a polymer or polymers, at least one representative of the group comprising polyurethanes, polyvinyl acetates, polyvinyl ethers, polyvinyl propionates, polystyrenes, natural or synthetic rubbers, poly((meth)acrylates) and homopolymers and co-polymers based on (meth)acrylates, acrylonitrile, vinyl esters, vinyl ethers, vinyl chloride and/or styrene, and the polyol component (A) contains a quantity of from 0.01 to 5 % by weight of at least one cell stabiliser selected from the group comprising alkoxylated fatty acids, ethoxylated (C₁-C₁₈)-alkyl phenols and/or ethoxylated castor oil.

2. Two-component foam system according to claim 1, **characterised in that** the aqueous polymer dispersion contains, as a polymer or polymers, poly(methacrylic acid alkyl ester), poly(acrylic acid alkyl ester), poly(methacryclic acid aryl ester), poly(acrylic acid aryl ester) and/or co-polymers thereof with n-butyl acrylate and/or styrene.

3. Two-component foam system according to at least one of claims 1 and 2, **characterised in that** the polyol component (A) contains 20 to 300 parts by weight, and preferably 50 to 150 parts by weight, of the polymer or polymers in the aqueous polymer dispersion to 100 parts by weight of the polyol or polyols in the polyol component (A).

4. Two-component foam system according to at least one of claims 1 to 3, **characterised in that** the aqueous polymer dispersion has a water content of from 5 to 80% by weight and preferably 20 to 60% by weight.

5. Two-component foam system according to at least one of claims 1 to 4, **characterised in that** the polyol component (A) contains, as a polyol, at least one representative of the group comprising straight-chain or branched-chain, aliphatic, aromatic and/or araliphatic, monomeric or polymeric polyols, polyester polyols. polyether polyols, fatty acid polyester polyols, aminopolyols and halogenated polyols, preferably having molecular weights in the range from 200 to 10,000 and from 2 to 6 hydroxyl groups, and in particular polyethylene glycol, polypropylene glycol and polybutylene glycol having a mean numerical molecular weight from 200 to 3000 and preferably from 300 to 600, polyester polyols and/or polyether polyols having a functionality from 1.5 to 5 and an OH number from 100 to 700, and the polyisocyanate component (B) preferably contains a polyisocyanate having a functionality equal to or greater than 2 and an NCO content of from 20 to 40%.

6. Two-component foam system according to at least one of the foregoing claims, **characterised in that** the polyol component (A) contains a quantity of from 0.1 to 1.5% by weight of the cell stabiliser.

7. Two-component foam system according to at least one of the foregoing claims, **characterised in that** the polyol component (A) contains at least one intumescent material.

8. Two-component foam system according to claim 7, **characterised in that** it contains expandable graphite and/or vermiculite as an intumescent material.

9. Two-component foam system according to at least one of the foregoing claims, **characterised in that** the polyol component (A) contains, as a catalyst for reacting the polyol with the polyisocyanate, an aromatic and/or aliphatic, secondary or tertiary amine, an organometallic compound of a metal from the group comprising Zn, Sn, Mn, Mg, Bi, Sb, Pb and Ca and in particular an octoate, naphthenate or acetyl acetonate of these metals.

10. Two-component foam system according to at least one of the foregoing claims, **characterised in that** the polyisocyanate component (B) contains a polyisocyanate selected from the group comprising aliphatic, cyclo-aliphatic, araliphatic, aromatic and hetero-cyclic polyisocyanates and in particular 4,4'-methylene di(phenyl isocyanate), toluylene diisocyanate, isopropylidene diisocyanate, hexamethylene diisocyanate and/or a prepolymer or oligomer of these diisocyanates.

11. Two-component foam system according to at least one of the foregoing claims, **characterised in that** the polyol component (A) and/or the polyisocyanate component (B) contains a blowing agent based on a condensed or liquefied gas such as air, nitrogen, carbon dioxide, nitrous oxide, a fluorinated hydrocarbon such as 1,1,1,2-tetrafluoroethane or 1,1,1,2,3,3,3-heptafluoropropane, dimethyl ether, butane and/or propane.

12. Two-component foam system according to at least one of the foregoing claims, **characterised in that** the polyol component (A) and/or the polyisocyanate component (B) contains an organic or inorganic flameproofing agent.

13. Two-component foam system according to claim 12, **characterised in that** it contains a quantity of from 01. to 20% by weight, and preferably from 0.5 to 5% by weight, of the organic or inorganic flameproofing agent.

14. Two-component foam system according to claim 12 or 13, **characterised in that** what is contained as a flameproofing agent is red phosphorus, a phosphorus compound and in particular triethyl phosphate, triphenyl phosphate and/or a halogenated phosphoric acid ester such as trichloroethyl phosphate, tris(2-chloroisopropyl)-phosphate or tris(2-chloroethyl)-phosphate, a metal hydroxide and in particular aluminium hydroxide or magnesium hydroxide, zinc borate, ammonium polyphosphate and/or antimony oxide.

15. Two-component foam system according to at least one of the foregoing claims, **characterised in that** the polyol component (A) contains an agent for accelerating the coagulation of the polymer dispersion.

16. Two-component foam system according to claim 15, **characterised in that** the polyol component (A) contains, as an agent for accelerating the coagulation, a finely divided solid, a salt or oxide of a polyvalent metal such as of a metal which is one of the alkaline earth elements or of zinc, aluminium or iron, or an organic acid.

17. Two-component foam system according to claim 16, **characterised in that** the polyol component (A) contains, as an agent for accelerating the coagulation, at least one finely divided inorganic and/or organic filler.

18. Two-component foam system according to claim 17, **characterised in that** the polyol component (A) contains, as an agent for accelerating the coagulation, at least one finely divided inorganic filler selected from the group comprising metal oxides, borates, carbonates and preferably chalk, silicates, kaolin, powdered glass, iron oxide, titanium dioxide, silicon dioxide, inorganic foams and preferably foamed expandable clay, foamed pearlite and foamed vermiculite, and/or hollow spherelets of silicate material or glass.

19. Two-component foam system according to claim 18, **characterised in that** the polyol component (A) contains, as an agent for accelerating the coagulation, at least one vegetable and/or animal polymer in particulate and/or fibre form, based in particular on potatoes, maize, rice, cereals, wood, cork, paper, leather, cellulose, hemp, cotton or wool, and preferably starch.

20. Two-component foam system according to claim 19, **characterised in that** the polyol component (A) contains, as an agent for accelerating the coagulation, calcium nitrate, zinc nitrate, zinc oxide, aluminium sulphate, aluminium chloride, iron sulphate, ferric chloride, formic acid, acetic acid, polacrylamide and in particular ammonium polysulphate.

21. Two-component foam system according to claims 15 to 20, **characterised in that** the polyol component (A) contains in addition a coagulating aid and preferably an ester alcohol or a glycol and preferably 2,2,4-trimethyl-1,3-pentanediol-monisobutyrate.

22. Two-component foam system according to at least one of the foregoing claims, **characterised in that** the polyol component (A) and/or the polyisocyanate component (B) contains a thixotropicising agent and/or a dilutant or solvent.

23. Two-component foam system according to claim 22, **characterised in that** what is contained as a thixotropicising agent is silica, a stratified silicate and in particular a synthetic magnesium stratified silicate, an activated bentonite, sepionite or attapulgite, a polyethylene wax and/or a cellulose derivative such for example as hydroxyethyl cellulose.

24. Two-component foam system according to claim 23, **characterised in that** what is contained as a dilutant or solvent is an aliphatic alcohol such as butanol or dipropylene glycol.

25. Two-component foam system according to at least one of the foregoing claims, **characterised in that** the polyol component (A) and/or the polyisocyanate component (B) contains in addition at least one inorganic and/or organic filler.

26. Two-component foam system according to claim 25, **characterised in that** it contains, as an inorganic filler, a metal oxide, a borate, a carbonate and preferably chalk, a silicate, kaolin, powdered glass, iron oxide, titanium dioxide, silicon dioxide, an inorganic foam and preferably foamed expandable clay, foamed pearlite or foamed vermiculite, and/or hollow spherelets of silicate material or glass.

27. Two-component foam system according to claim 26, **characterised in that** it contains, as an organic filler, a vegetable and/or animal polymer in particulate and/or fibre form, based in particular on potatoes, maize, rice, cereals, wood, cork, paper, leather, cellulose, hemp, cotton or wool, and preferably starch.

28. Two-component foam system according to at least one of the foregoing claims, **characterised in that** the polyol component (A) and/or the polyisocyanate component (B) contains in addition auxiliaries and additives, stabilisers, plasticisers, catalysts, solvents, pigments and/or colorants which are known per se.

29. Two-component foam system according to claim 28, **characterised in that** what is contained as a plasticiser is an ester based on phthalic acid, adipic acid, sebacic acid, phosphoric acid, citric acid or a fatty acid.

30. Two-component foam system according to at least one of the foregoing claims, **characterised in that** the polyol component (A) and the polyisocyanate component (B) are kept separate in a two-chambered or multi-chambered device to inhibit reaction and can be caused to react under applicational conditions while a ratio of the NCO groups in the polyisocyanate or polyisocyanates to the OH groups in the polyol or polyols of from 1:5 to 10:1 is maintained.

31. Use of the two-component foam system according to claims 1 to 30 to foam-fill openings, apertures for running cables and pipes through walls, floors and/or ceilings, gaps between parts of walls and ceilings, between openings in walls and parts of the structure to be fitted into them such as window and door frames, between ceilings and walls and between outer walls and curtain walls of buildings, for the purposes of fastening, thermal insulation and/or fire safety.

## Revendications

1. Système de mousse à deux composants pour la production de mousses pour application à la construction, ayant un composant polyol (A), qui contient au moins un polyol, éventuellement un catalyseur pour la réaction du polyol avec le polyisocyanate et une dispersion aqueuse de polymère comme générateur de mousse, et un composant polyisocyanate (B), qui contient au moins un polyisocyanate, dans lequel les rapports des quantités du ou des polyols et du ou des polyisocyanates est adapté de manière à ce qu'il en résulte après le mélange prescrit du composant polyol (A) avec le composant polyisocyanate (B) un rapport molaire des groupes isocyanate du polyisocyanate par rapport aux groupes OH des polyols (rapport NCO : OH) de 1 : 5 à 10 : 1, de préférence de 1 : 1 à 2 : 1, **caractérisé en ce que** le composant polyol (A) contient la dispersion aqueuse de polymère en une quantité telle qu'il en résulte une teneur en eau dans le composant polyol (A) de 20 à 60 parties en poids pour 100 parties en poids du ou des polyols du composant polyol (A), la dispersion aqueuse de polymère contient comme polymère au moins un représentant du groupe comprenant les polyuréthanes, les poly(acétates de vinyle), les polyvinyléthers, les poly(propionates de vinyle), les polystyrènes, les caoutchoucs naturels ou synthétiques, les poly((méth)acrylates) et les homo- et copolymères à base de (méth)acrylates, d'acrylonitrile, d'esters de vinyle, de vinyléthers, de chlorure de vinyle et/ou de styrène et le composant polyol (A) contient au moins un stabilisateur d'alvéoles en une quantité de 0,01 à 5 % en poids choisi parmi le groupe comprenant les acides gras alcoxylés, les (alkyle en C₁ à C₁₈)-phénols éthoxylés et/ou l'huile de ricin éthoxylée.

2. Système de mousse à deux composants selon la revendication 1, **caractérisé en ce que** la dispersion aqueuse de polymère contient comme polymère un poly(méthacrylate d'alkyle), un poly(acrylate d'alkyle), un poly(méthacrylate d'aryle), un poly(acrylate d'aryle) et/ou des copolymères de ceux-ci avec l'acrylate de n-butyle et/ou le styrène.

3. Système de mousse à deux composants selon au moins une des revendications 1 ou 2, **caractérisé en ce que** le composant polyol (A) contient 20 à 300 parties en poids, de préférence 50 à 150 parties en poids, du ou des polymères de la dispersion aqueuse de polymère pour 100 parties en poids du ou des polyols du composant polyol (A).

4. Système de mousse à deux composants selon au moins l'une des revendications 1 à 3, **caractérisé en ce que** la dispersion aqueuse de polymère présente une teneur en eau de 5 à 80 % en poids, de préférence de 20 à 60 % en poids.

5. Système de mousse à deux composants selon au moins l'une des revendications 1 à 4, **caractérisé en ce que** le composant polyol (A) est en tant que polyol au moins un représentant du groupe comprenant les polyols, polyesterpolyols, polyétherpolyols, polyesters d'acide gras-polyols, aminopolyols et polyols halogénés à chaîne linéaire ou ramifiés, aliphatiques, aromatiques et/ou araliphatiques, monomères ou polymères, de préférence avec des masses moléculaires dans la plage de 200 à 10 000 et 2 à 6 groupes hydroxyle, en particulier le polyéthylèneglycol, le polypropylèneglycol et le polybutylèneglycol avec une masse moléculaire moyenne en nombre de 200 à 3 000, de préférence de 300 à 600, les polyesterpolyols et/ou les polyétherpolyols avec une fonctionnalité de 1,5 à 5 et un indice OH de 100 à 700; et le composant polyisocyanate (B) contient de préférence un polyisocyanate avec une fonctionnalité égale ou supérieure à 2 et une teneur en NCO de 20 à 40 %.

6. Système de mousse à deux composants selon au moins l'une des revendications précédentes, **caractérisé en ce que** le composant polyol (A) contient le stabilisateur d'alvéoles en une quantité de 0,1 à 1,5 % en poids.

7. Système de mousse à deux composants selon au moins l'une des revendications précédentes, **caractérisé en ce que** le composant polyol (A) contient au moins un matériau intumescent.

8. Système de mousse à deux composants selon la revendication 7, **caractérisé en ce qu'**il contient comme matériau intumescent du graphite gonflant et/ou de la vermiculite.

9. Système de mousse à deux composants selon au moins l'une des revendications précédentes, **caractérisé en ce que** le composant polyol (A) contient comme catalyseur pour la réaction du polyol avec le polyisocyanate une amine aromatique et/ou aliphatique, secondaire ou tertiaire, un composé organométallique d'un métal du groupe comprenant Zn, Sn, Mn, Mg, Bi, Sb, Pb et Ca, en particulier un octoate, un naphténate ou un acétylacétonate de ces métaux.

10. Système de mousse à deux composants selon au moins l'une des revendications précédentes, **caractérisé en ce que** le composant polyisocyanate (B) contient un polyisocyanate choisi dans le groupe comprenant les polyisocyanates aliphatiques, cycloaliphatiques, araliphatiques, aromatiques et hétérocycliques, en particulier le 4,4'-méthylènedi(phénylisocyanate), le toluylènediisocyanate, l'isopropylidènediisocyanate, l'hexaméthylènediisocyanate et/ou un prépolymère ou un oligomère de ces diisocyanates.

11. Système de mousse à deux composants selon au moins l'une des revendications précédentes, **caractérisé en ce que** le composant polyol (A) et/ou le composant polyisocyanate (B) contient un agent moussant à base d'un gaz sous pression ou liquéfié, comme l'air, l'azote, le dioxyde de carbone, le protoxyde d'azote, un hydrocarbure fluoré, comme le 1,1,1,2-tétrafluoroéthane ou le 1,1,1,2,3,3,3-heptafluoropropane, le diméthyléther, le butane et/ou le propane.

12. Système de mousse à deux composants selon au moins l'une des revendications précédentes, **caractérisé en ce que** le composant polyol (A) et/ou le composant polyisocyanate (B) contient un agent pare-flammes organique ou inorganique.

13. Système de mousse à deux composants selon la revendication 12, **caractérisé en ce qu'**il contient l'agent pare-flammes organique ou inorganique en une quantité de 0,1 à 20 % en poids, de préférence de 0,5 à 5 % en poids.

14. Système de mousse à deux composants selon la revendication 12 ou 13, **caractérisé en ce qu'**il contient comme agent pare-flammes du phosphore rouge, un composé du phosphore, en particulier le phosphate de triéthyle, le phosphate de triphényle et/ou un ester d'acide phosphorique halogéné, comme le phosphate de trichloroéthyle, le tris(2-chloroisopropyl)phosphate ou le tris(2-chloroéthyl)phosphate, un hydroxyde de métal, en particulier l'hydroxyde d'aluminium ou l'hydroxyde de magnésium, le borate de zinc, le polyphosphate d'ammonium et/ou le monoxyde d'antimoine.

15. Système de mousse à deux composants selon au moins l'une des revendications précédentes, **caractérisé en ce que** le composant polyol (A) contient un agent pour accélérer la coagulation de la dispersion de polymère.

16. Système de mousse à deux composants selon la revendication 15, **caractérisé en ce que** le composant polyol (A) contient comme agent pour accélérer la coagulation un solide finement divisé, un sel ou oxyde d'un métal polyvalent, tel qu'un métal des éléments de terres rares, de zinc, d'aluminium ou de fer, ou un acide organique.

17. Système de mousse à deux composants selon la revendication 16, **caractérisé en ce que** le composant polyol (A) contient comme agent pour accélérer la coagulation au moins une charge inorganique et/ou organique finement divisée.

18. Système de mousse à deux composants selon la revendication 17, **caractérisé en ce que** le composant polyol (A) contient comme agent pour accélérer la coagulation au moins une charge inorganique finement divisée choisie dans le groupe comprenant les oxydes métalliques, les borates, les carbonates, de préférence la craie, les silicates, le kaolin, la poudre de verre, l'oxyde de fer, le dioxyde de titane, le dioxyde de silicium, les mousses inorganiques, de préférence l'argile gonflante expansée, la perlite expansée et la vermiculite expansée, et/ou de petites billes creuses d'un matériau silicaté ou le verre.

19. Système de mousse à deux composants selon la revendication 18, **caractérisé en ce que** le composant polyol (A) contient comme agent pour accélérer la coagulation au moins un polymère particulaire et ou fibreux, végétal et/ou animal, en particulier à base de pommes de terre, de maïs, de riz, de céréales, de bois, de liège, de papier, de cuir, de cellulose, de chanvre, de coton et de laine, de préférence d'amidon.

20. Système de mousse à deux composants selon la revendication 19, **caractérisé en ce que** le composant polyol (A) contient comme agent pour accélérer la coagulation du : nitrate de calcium, nitrate de zinc, oxyde de zinc, sulfate d'aluminium, chlorure d'aluminium, sulfate de fer, chlorure de fer, acide formique, acide acétique, polyacrylamide et en particulier polyphosphate d'ammonium.

21. Système de mousse à deux composants selon les revendications 15 à 20, **caractérisé en ce que** le composant polyol (A) contient additionnellement un adjuvant de coagulation, de préférence un ester-alcool ou un glycol, de préférence le 2,2,4-triméthyl-1,3-pentanediol-monoisobutyrate.

22. Système de mousse à deux composants selon au moins l'une des revendications précédentes, **caractérisé en ce que** le composant polyol (A) et/ou le composant polyisocyanate (B) contient un agent de thixotropie et/ou un diluant ou solvant.

23. Système de mousse à deux composants selon la revendication 22, **caractérisé en ce qu'**il contient comme agent de thixotropie de l'acide silicique, un silicate lamellaire, en particulier un silicate lamellaire synthétique de magnésium, une bentonite activée, une sépionite ou une attapulgite, une cire de polyéthylène et/ou un dérivé de cellulose, par exemple l'hydroxyéthylcellulose.

24. Système de mousse à deux composants selon la revendication 23, **caractérisé en ce qu'**il contient comme diluant ou solvant un alcool aliphatique comme le butanol ou le dipropylèneglycol.

25. Système de mousse à deux composants selon au moins l'une des revendications précédentes, **caractérisé en ce que** le composant polyol (A) et/ou le composant polyisocyanate (B) contient additionnellement au moins une charge inorganique et/ou organique.

26. Système de mousse à deux composants selon la revendication 25, **caractérisé en ce qu'**il contient comme charge inorganique un oxyde métallique, un borate, un carbonate, de préférence la craie, un silicate, du kaolin, de la poudre de verre, un oxyde de fer, le dioxyde de titane, le dioxyde de silicium, une mousse inorganique, de préférence l'argile gonflante expansée, la perlite expansée et la vermiculite expansée, et/ou de petites billes creuses de matériau silicaté ou de verre.

27. Système de mousse à deux composants selon la revendication 28, **caractérisé en ce qu'**il contient comme charge organique un polymère particulaire et/ou fibreux végétal et/ou animal, en particulier à base de pommes de terre, de maïs, de riz, de céréales, de bois, de liège, de papier, de cuir, de cellulose, de chanvre, de coton et de laine, de préférence d'amidon.

28. Système de mousse à deux composants selon au moins l'une des revendications précédentes, **caractérisé en ce que** le composant polyol (A) et/ou le composant polyisocyanate (B) contient additionnellement des adjuvants et additifs, des stabilisants, des assouplissants, des catalyseurs, des solvants, des pigments et/ou des colorants connus en soi.

29. Système de mousse à deux composants selon la revendication 28, **caractérisé en ce qu'**il contient comme assouplissant un ester à base d'acide phtalique, d'acide adipique, d'acide sébacique, d'acide phosphorique, d'acide citrique ou d'un acide gras.

30. Système de mousse à deux composants selon au moins l'une des revendications précédentes, **caractérisé en ce que** le composant polyol (A) et le composant polyisocyanate (B) sont contenus séparés dans un dispositif à deux chambres ou plus et peuvent être mis à réagir dans les conditions d'utilisation en respectant un rapport des groupes NCO du ou des polyisocyanates respectifs aux groupes OH du ou des polyols respectifs de 1 : 5 à 10 : 1.

31. Utilisation du système de mousse à deux composants selon les revendications 1 à 30 pour le remplissage par de la mousse d'ouvertures, de conduits de câbles et de tuyaux dans les cloisons, les sols et/ou les plafonds, de joints entre des parties de plafonds et de cloisons, entre des ouvertures de murs et des pièces de construction insérées, comme des châssis de portes et de fenêtres, entre les plafonds et les parois et entre des parois externes et des façades situées à l'avant de bâtiments dans un but de fixation, d'isolation thermique et/ou d'ignifugation.
